# EUROPEAN PATENT APPLICATION

(11) **EP 1 609 685 A2**
(43) Date of publication of application: **28.12.2005**
(21) Application number: 05009044.8
(22) Date of filing: 25.04.2005
(51) Int. Cl.: B60R 21/26

(54) **Inflator and airbag apparatus**

(30) Priority: 22.06.2004 JP 2004183877
(71) Applicant: TAKATA CORPORATION, Minato-ku, Tokyo 106-8510 (JP)
(72) Inventor: Yano, Kanji, Tokyo 106-8510 (JP); Nishimura, Jun, Tokyo 106-8510 (JP)
(74) Representative: Vossius & Partner

(57) **Abstract**

To provide an inflator constructed to release a reaction gas generated by the reaction of the chemicals after is sufficiently mixed with a gas in a storage chamber.

A gas storage chamber 8 of a vessel 2 is charged with a pressurized gas. When a power is supplied to an electrode of an initiator 5, the initiator 5 generates a high-temperature gas, and chemicals 4 making contact with the high-temperature gas generate a large amount of gas. The reaction gas ruptures a first sealing plate 6 and flows into a gas storage chamber 8 through the nozzles 14 and 15 of a guide member 7, while forming a swirl. As the gas pressure of the gas storage chamber 8 increases, the second sealing plate 9 is ruptured, and the gas is released from a guide hole 12 through the gas outlet 10. Then, the gas rapidly expands an airbag. Since the reaction gas of the chemicals forms the swirl G, the reaction gas and the storage gas are sufficiently mixed with each other and released from the gas outlet 10.

## Description

The present invention relates to an inflator, and in particular, to a hybrid inflator constructed to release a gas generated from gas-generating chemicals and a pressurized gas stored in a gas storage chamber. In addition, the present invention relates to an airbag apparatus using the above-mentioned inflator.

A hybrid inflator includes gas-generating chemicals ignited by an initiator and a pressurized gas storage chamber charged with a pressurized gas. When the chemicals start to react by the initiator, the reaction gas flows into the gas storage chamber. Then, the gas ruptures a sealing member separating the gas storage chamber and the gas outlet, and a mixed gas of a gas stored in the gas storage chamber (hereinafter referred to as storage gas) and the reaction gas is released from the gas outlet.

JP-A-2003-226219 (Patent Document) discloses an inflator that releases a reaction gas from a hole of a perforated cap and collides it against an inner wall of a cylindrical gas storage chamber at its one end to stick combustion residues in the reaction gas to a chamber wall. A gas outlet is provided at the other end of the gas storage chamber.

In the inflator of JP-A-2003-226219, there is a problem in that the reaction gas generated by the reaction chemicals is not sufficiently mixed with the storage gas in the gas storage chamber.

Specifically, when the chemicals start to react and the reaction gas flows into the gas storage chamber, there is a tendency that the reaction gas tends to form a bulk portion at one end of the gas storage chamber, the storage gas is pushed and released by the bulk gas, and then the reaction gas is released. If the reaction gas is not sufficiently mixed with the storage gas, the temperature of the released gas becomes high when a gas containing much reaction gas is released. Therefore, an airbag is required to have heat-resistant characteristics to sustain a strength enough to endure the high temperature gas, even if it makes contact with the high temperature gas.

JP-A-2003-226219 also discloses the configuration having no perforated cap. However, in this case, the gas released from the initiator flows straight into the gas storage chamber and arrives at the gas outlet. Thus, there is a problem in that the storage gas is not sufficiently mixed with the reaction gas, and the temperature of the released gas becomes high.

It is an object of the present invention to provide an inflator constructed to release a reaction gas generated by the reaction of the chemicals after is sufficiently mixed with gas in a storage chamber.

An inflator of the present invention is a hybrid inflator comprising a gas storage chamber charged with pressurized gas; a chemical chamber charged with gas-generating chemicals; an initiator for igniting the chemicals; a gas outlet; and a sealing plate separating the gas outlet and the gas storage chamber. The chemicals react to generate gas by the initiator, and the gas flows into the pressurized gas storage chamber and ruptures the sealing plate, and the gas in the pressurized gas storage chamber and the gas generated from the chemicals are released from the gas outlet. The inflator further comprises swirl forming means that swirls the gas that is generated from the chemicals and flows into the gas storage chamber is provided.

Preferably, the swirl forming means is a guide member that guides the gas to swirl.

An airbag apparatus according to the present invention is an airbag comprising the inflator of the present invention and an airbag expanded by the gas from the inflator.

In the present invention, the gas generated from the reaction of the chemicals swirls and flows into the gas storage chamber. Thus, the reaction gas and the storage gas are sufficiently mixed with each other. Therefore, the temperature of the released gas becomes constant. As a result, the heat resistance required for the airbag can be decreased.

A gas guide member that has a simple configuration and can surely form a swirl is suitable for the swirl forming means.

Hereinafter, an embodiment will now be described with reference to the accompanying drawings.

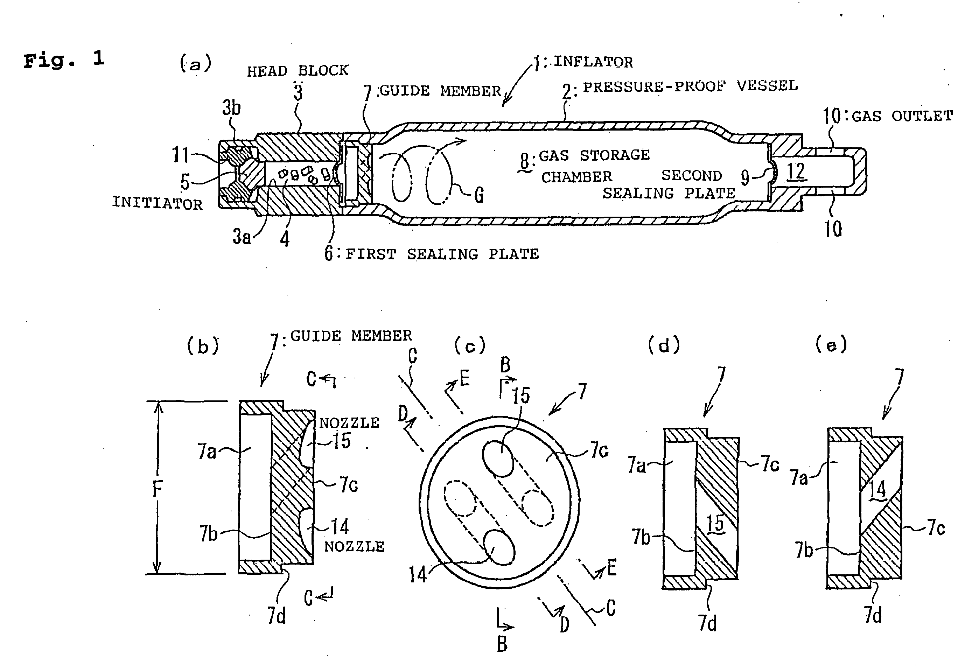

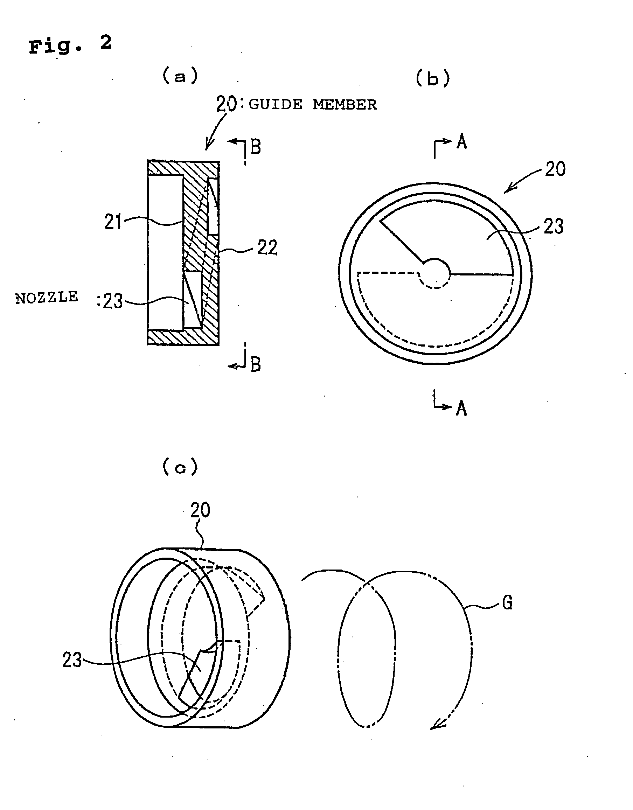

Fig. 1(a) is a longitudinal sectional view of an inflator according to the embodiment, and Fig. 1(b) is an enlarged view of a gas guide member of Fig. 1(a), illustrating a cross-section taken along the B-B line in Fig. 1(c). Fig. 1(c) is a right side view (figure taken along the line C-C) of Fig. 1(b), Fig. 1(d) is a cross-sectional view taken along the line D-D of Fig. 1(c), and Fig. 1(e) is a cross-sectional view taken along E-E of Fig. 1(c). Figs. 2 to 4 illustrates the configuration of guide members used in inflators according to other embodiments.

As shown in Fig. 1(a), the inflator 1 comprises a substantially cylindrical pressure-proof vessel 2 (hereinafter referred to as vessel); a head block 3 fixed at one end of the vessel 2; gas-generating chemicals 4 charged in the head block 3, an initiator for igniting the chemicals 4; a first sealing plate 6 separating the interior of the head block 3 and one end of a gas storage chamber 8; a guide member 7 as swirl forming means; and a second sealing plate 9 separating the other end of the gas storage chamber 8 and a gas outlet 10.

The vessel 2 is made of a copper material etc., and, its gas storage chamber 8 is charged with a gas, for example, 10,000 to 70,000 kPa of nitrogen, argon or helium etc. The head block 3 made of a copper material etc. is fixed to one end of the vessel 2 by welding etc. The head block 3 has a thick cylindrical shape, and the inner hole 3a is charged with the chemicals 4 as a chemical chamber. A portion of the inner hole 3a at the vessel 2 side is sealed by the first sealing plate 6.

The sealing plate 6 is made of, for example, a stainless sheet and is fixed to the end surface of the head block 3 at the vessel 2 side by welding. The first sealing plate 6 is provided with a substantially hemispheric bulging portion which enters the inner hole 3a and endures the pressure of gas from the gas storage chamber 8. The bulging portion may be provided with rupture-promoting slits.

The initiator 5 is disposed to face a portion of the inner hole 3a opposite to the vessel 2. The initiator 5 includes igniting chemicals and ignition means such as a resistance heating element etc. for igniting the igniting chemicals. In the initiator 5, when power is applied to the ignition means, the igniting chemicals react to generate a high-temperature gas. The initiator 5 is held in an end sleeve 3b of the head block 3 by an initiator holder 11.

The other end of the vessel 2 is provided with a guide hole 12, and the gas outlet 10 is disposed at the end of the guide hole 12. The second sealing plate 9 is provided so as to seal the inflow end of the guide hole 12. A hemispheric bulging portion provided at the second sealing plate 9 enters the guide hole 12. The sealing plate 9 is fixed to the circumferential edge of the inflow end of the guide hole 12. The gas storage chamber 8 is formed between the sealing plates 6 and 9.

Although not shown, a filter may be provided in the guide hole 12 to collect combustion residues of the chemicals 4 etc.

Next, the configuration of the guide member 7 will be described with reference to Figs. 1(b) to 1(e).

The guide member 7 is substantially disc-shaped, and a circular recessed part 7a is formed at the surface of the guide member 7 facing the first sealing plate 6. Two nozzles 14 and 15 are provided for communicating a bottom surface 7b of the recessed part 7a with a rear surface 7c of the guide member 7. The respective nozzles 14 and 15 extend linearly, and their axes have a twisted relationship to each other.

The nozzle 14 is located at one half with respect to a plane (a plane taken along the C-C line in Fig. 1(c)) passing through both the nozzles 14 and 15 and including the axis of the disc-shaped guide member 7, and the nozzle 15 is located at the other half with respect to the plane.

Since the nozzles 14 and 15 have such a relationship, the gas passing through the nozzles 14 and 15 forms a swirl like an arrow G in Fig. 1(a).

The operation of the inflator constructed as described above is as follows.

When the initiator 5 is supplied with a power, it generates a high-temperature gas, and then a large amount of reaction gas is generated by the chemicals 4 making contact with the high-temperature gas. The pressure of the high-temperature gas ruptures the first sealing plate 6, and the reaction gas passes through the nozzles 14 and 15 of the guide member 7 and flows into the gas storage chamber 8 while forming a swirl G. As the gas pressure of the gas storage chamber 8 increases, the second sealing plate 9 is ruptured, and the gas is released from the guide hole 12 via the gas outlet 10. Then, the gas rapidly expands the airbag.

In the above-mentioned inflator 1, since the reaction gas of the chemicals 4 forms a swirl G, the reaction gas is sufficiently mixed with the storage gas and released from the gas outlet 10. Therefore, the temperature of the releasing-gas is almost constant. That is, the hot reaction gas is not gathered and released from the gas outlet 10. Therefore, the heat resistance required for the airbag expanded by the inflator 1 is decreased.

Other examples of guide members that can be used in the inflator of the present invention will be described with reference to Figs. 2 to 4.

A guide member 20 shown in Fig. 2 is substantially disc-shaped, and a spiral nozzle 23 is provided to communicate one face 21 of the guide member 20 with the other face 22 thereof. The gas passes through the spiral nozzle 23 disposed in the vessel, to thereby form a swirl G as shown in Fig. 2(c). In addition, Fig. 2(a) is a cross-sectional view of the guide member 20 taken along its axis and illustrates a cross-sectional view taken along the line A-A in Fig. 2(b). Fig. 2(b) is a cross-sectional view taken along the line B-B in Fig. 2(a), and Fig. 2(c) is a perspective view of the guide member 20.

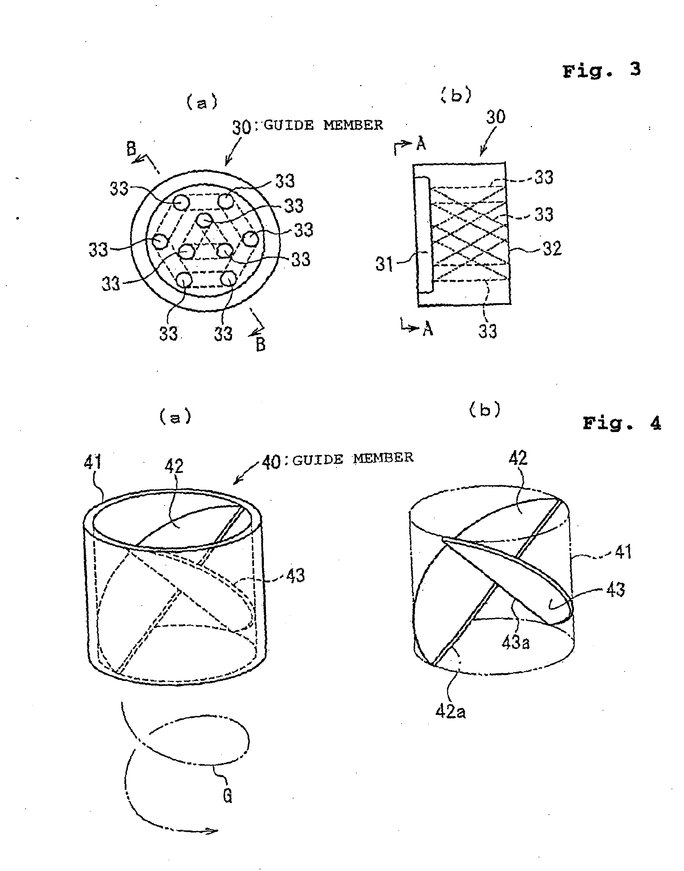

A guide member 30 in Fig. 3 includes a lot of nozzles 33 (nine nozzles in the figure). Each nozzle 33 communicates a face 31 of the substantially disc-shaped guide member 30 with a face 32 thereof. Every nozzle 33 is inclined in the same direction around the axis of the guide member 30. The gas passes through the nozzles 33 of the guide member 30 disposed in the vessel 2, to thereby form a swirl. In addition, Fig. 3(a) is a front view of the guide member 30 (a figure taken along the line A-A in Fig. 3(b)), and Fig. 3(b) is a cross-sectional view thereof taken along the line B-B in Fig. 3(a). In order to make the configuration clear, the hatching of the cross-section is omitted in Fig. 3(b).

A guide member 40 in Fig. 4 includes two pieces of semi-elliptic plates 42 and 43 in a cylindrical casing 41. The circumferential edges of the semi-elliptic plates 42 and 43 touch the inner circumferential face of the casing 41 and are fixed thereto by welding etc. Chords 42a and 43a of the semi-elliptic plates 42 and 43 are connected to each other at their longitudinal intermediate portions. The plate faces of the semi-elliptic plates 42 and 43 intersect each other at right angles. The gas passes through the guide member 40 disposed in the vessel 2, to thereby form the swirl G as shown in Fig. 4(a). In addition, Fig. 4(a) is a perspective view of the guide member 40, and Fig. 4(b) is a perspective view illustrating the semi-elliptic plates 42 and 43.

The above-described embodiments are just examples of the present invention, and the present invention can take the forms other than those illustrated in drawings. For example, the guide member 7 is disposed in the vessel 2 in the above-described embodiment, but a guide ban for forming a swirl may be provided at the inner circumferential edge of the vessel 2.

The inflator of the present invention can be applied to various kinds of airbag apparatuses, such as those for a front passenger, a head-protection, a shoulder-protection, a driver, and a rear passenger.

## Claims

1. A hybrid inflator comprising:
a gas storage chamber charged with a pressurized gas;
a chemical chamber charged with gas-generating chemicals;
an initiator for igniting the chemicals;
a gas outlet;
a sealing plate separating the gas outlet and the gas storage chamber, wherein the chemicals react to generate a gas by the initiator, the gas flows into the pressurized gas storage chamber to rupture the sealing plate, and the gas in the pressurized gas storage chamber and the gas generated from the chemicals are released from the gas outlet; and
swirl forming means that swirls the gas that is generated from the chemicals and flows into the gas storage chamber.

2. The inflator according to Claim 1,
wherein the swirl forming means is a guide member that guides the gas to swirl.

3. An airbag apparatus comprising:
an airbag and
an inflator according to claim 1 or 2 for expanding the airbag.
